Europäisches Patentamt

European Patent Office

Office européen des brevets

(11) Numéro de publication : **0 017 526**
**B1**

# (12) FASCICULE DE BREVET EUROPÉEN

(45) Date de publication du fascicule du brevet :
26.01.83

(51) Int. Cl.³ : **A 01 N 53/00**

(21) Numéro de dépôt : **80400331.7**

(22) Date de dépôt : **13.03.80**

(54) **Nouvelles compositions actives contre les arthropodes, renfermant un mélange synergique à base d'esters de (S) alléthrolone et de (R) alléthrolone.**

(30) Priorité : **16.03.79 FR 7906712**

(43) Date de publication de la demande :
**15.10.80 Bulletin 80/21**

(45) Mention de la délivrance du brevet :
**26.01.83 Bulletin 83/04**

(84) Etats contractants désignés :
**AT BE CH DE FR IT NL SE**

(56) Documents cités :
**FR A 2 201 036**

(73) Titulaire : **ROUSSEL-UCLAF**
**35, boulevard des Invalides**
**F-75007 Paris (FR)**

(72) Inventeur : **Joly, Robert**
**8, rue Chevalier**
**F-95160 Montmorency (FR)**
Inventeur : **Pavan, Charles**
**26-28, grande rue Charles-de-Gaulle**
**F-94130 Nogent-sur-Marne (FR)**
Inventeur : **Carle, Pierre Régis**
**12, rue Charles-Gounod**
**F-13870 Rognonas (FR)**

(74) Mandataire : **Douetteau, Pierre et al**
**c/o ROUSSEL-UCLAF 102, route de Noisy Boîte**
**postale 9**
**F-93230 Romainville (FR)**

Jouve, 18, rue St-Denis, 75001 Paris, France

# 0 017 526

## Nouvelles compositions actives contre les arthropodes, renfermant un mélange synergique à base d'esters de (S) alléthrolone et de (R) alléthrolone

On ne connaissait jusqu'ici que des associations de d cis chrysanthémates d'alléthrolone racémique et de d trans chrysanthémates d'alléthrolone, décrites dans le brevet français 2.201.036.

L'invention concerne maintenant de nouvelles compositions pesticides contenant des mélanges synergiques à base d'esters de (S) alléthrolone et de (R) alléthrolone.

L'invention a particulièrement pour objet des compositions douées d'activité contre les arthropodes, caractérisées en ce qu'elles contiennent comme partie active, des mélanges synergiques contenant de 90 % à 60 % de d trans chrysanthémate de (S) 1-oxo 2-allyl 3-méthyl cyclopent-2-èn 4-yle et de 10 à 40 % de d trans chrysanthémate de (R) 1-oxo 2-allyl 3-méthyl cyclopent-2-èn 4-yle et notamment des compositions telles que définies précédemment, caractérisées en ce qu'elles contiennent comme partie active des mélanges synergiques de 80 % à 70 % de d trans chrysanthémate de (S) 1-oxo 2-allyl 3-méthyl cyclopent-2-èn 4-yle et de 20 % à 30 % de d trans chrysanthémate de (R) 1-oxo 2-allyl 3-méthyl cyclopent-2-èn 4-yle.

Parmi les compositions de l'invention définies ci-dessus, il convient de mentionner tout spécialement celles caractérisées en ce qu'elles contiennent comme partie active un mélange synergique contenant environ 75 % de d trans chrysanthémate de (S) 1-oxo 2-allyl 3-méthyl cyclopent-2-èn 4-yle et environ 25 % de d trans chrysanthémate de (R) 1-oxo 2-allyl 3-méthyl cyclopent-2-èn 4-yle.

Les compositions selon l'invention sont actives contre les arthropodes, notamment contre les insectes et les arachnides. Parmi les arachnides, les compositions de l'invention sont particulièrement utiles contre les ixodidés et les sarcoptidés.

L'invention a ainsi notamment pour objet des compositions telles que définies précédemment, caractérisées en ce qu'elles sont utilisées contre les insectes.

Selon un mode opératoire avantageux, les compositions de l'invention sont utilisées sous forme de compositions fumigantes.

Les compositions selon l'invention peuvent être avantageusement constituées, pour la partie non active, d'un serpentin insecticide (ou coil) combustible.

Les compositions selon l'invention peuvent également être constituées, pour la partie non active, d'un substrat fibreux incombustible. Le fumigant obtenu après incorporation de la matière active est placé sur un appareil chauffant tel qu'un électromosquito destroyer.

Dans le cas où l'on utilise un serpentin insecticide, le support inerte peut être, par exemple, composé de marc de pyrèthre, poudre de Tabu (ou poudre de feuilles Machilus Thumbergii), poudre de tige de pyrèthre, poudre de feuille de cèdre, poudre de bois (telle que de la sciure de pin) amidon et poudre de coque de noix de coco. La dose de matière active peut alors être, par exemple, de 0,03 à 1 % en poids.

Dans le cas où l'on utilise un support fibreux incombustible, la dose de matière active peut alors être, par exemple, de 0,03 à 95 % en poids.

Les compositions insecticides selon l'invention peuvent aussi être obtenues en préparant une huile pulvérisable à base de principe actif, cette huile imbibant la mèche d'une lampe et étant alors soumise à la combustion.

La concentration du principe actif incorporé à l'huile est, de préférence, de 0,03 à 95 % en poids.

Les compositions insecticides selon l'invention peuvent aussi être obtenues en incorporant le principe actif aux adjuvants nécessaires pour la pulvérisation en aérosols.

Ces divers exemples de compositions insecticides selon l'invention ne sont nullement limitatifs et les compositions de l'invention s'étendent à toutes formes permettant de diffuser le principe actif.

Dans les compositions selon l'invention, on peut également incorporer des produits qui jouent le rôle de stabilisants, tels que les phénols ou les arylamines, des composés synergisants classiques des pyréthrinoïdes tels que le 1-(2,5,8-trioxa dodécyl 2-propyl 4,5-méthylène dioxy)benzène (ou butoxyde de pipéronyle), le N-(2-éthyl heptyl)bicyclo/2,2-1/-5-hepten-2,3-dicarboximide ou le pipéronyl bis 2-(2'-n-butoxyéthoxy)éthyl acétal (ou Tropital), des agents antioxydants tel que l'acétate de tocophérol ou encore des agents émulsifiants.

Les compositions selon l'invention peuvent être utilisées notamment dans les habitations pour détruire les insectes tels que mouches, moustiques, etc... et dans les locaux industriels pour détruire, par exemple, les insectes nuisibles aux céréales et les insectes nuisibles à l'horticulture.

L'invention a également pour objet les mélanges synergiques tels que définis précédemment, caractérisés en ce qu'ils sont utilisés contre les sarcoptidés et les ixodidés.

L'invention a ainsi pour objet lesdits mélanges à usages pharmaceutiques vétérinaires, caractérisés en ce qu'ils sont utilisés pour la lutte contre les sarcoptidés et les ixodidés parasites des animaux, tels que les gales et les tiques.

Les compositions pharmaceutiques vétérinaires selon l'invention ayant pour principe actif lesdits mélanges peuvent être préparées selon les techniques usuelles.

Elles peuvent renfermer des composés synergisants des pyréthrinoïdes, des stabilisants, des antioxydants et des émulsifiants tels que déjà mentionnés.

Le principe actif et les divers agents étant, en général, en solution dans un alcool ou un mélange d'alcools.

L'étude de l'activité insecticide des mélanges de l'invention a été effectuée sur mouches, Culex et

2

Aedes.

Ici et dans ce qui suit, le terme « Bioalléthrine » désigne le d trans chrysanthémate de RS-alléthrolone, le terme « S-Bioalléthrine » désigne le d trans chrysanthémate de S-alléthrolone et le terme « Esbiothrine » désigne le mélange d'environ 75 % de d trans chrysanthémate de (S) alléthrolone et d'environ 25 % de d trans chrysanthémate de (R) alléthrolone.

D'autre part, on désigne par « puissance relative » d'un composé A par rapport à un composé B, le rapport :

$$PR = \text{activité de A/activité de B}$$

Les compositions de l'invention, mélange de S-bioalléthrine et de R-bioalléthrine (d trans chrysanthémate de R-alléthrolone), en des proportions définies, présentent un effet de synergie marqué.

En effet, d'une façon inattendue, l'activité insecticide de ces compositions, déterminée expérimentalement, a été trouvée nettement supérieure à la somme des activités des constituants des mélanges. On sait que la R-bioalléthrine est douée d'une activité insecticide négligeable.

C'est ainsi, par exemple, que la esbiothrine mélange d'environ 75 % de S-bioalléthrine et d'environ 25 % de R-bioalléthrine, devrait posséder, par rapport à la bioalléthrine une puissance relative de 75/50 = 1,5 alors qu'en réalité on trouve par voie expérimentale une puissance relative de 2 à 2,5.

L'étude insecticide donnée dans la partie expérimentale permet de démontrer, d'une façon beaucoup plus large, les effets de synergie constatés dans les mélanges de l'invention.

Les mélanges synergiques de l'invention peuvent être préparés en homogénéisant dans les proportions voulues, la S-bioalléthrine et la R-bioalléthrine. Ces deux derniers composés peuvent être notamment préparés en estérifiant, par les méthodes classiques, la S-alléthrolone ou la R-alléthrolone par l'acide d trans chrysanthémique. La S-alléthrolone et la R-alléthrolone, elles-mêmes, peuvent, par exemple, être préparées selon le procédé des brevets français 2.355.815 ou 2.362.830.

Les exemples suivants illustrent l'invention sans la limiter.

### Exemple 1 : Serpentin fumigène (ou coil)

| | |
|---|---|
| Poudre de Tabu : | 40 g |
| Farine de noix de coco : | 35 g |
| Poudre de bois de pin : | 10 g |
| Amidon : | 12,4 g |
| Parfum : | 0,5 g |
| Salicyl anilide : | 1,3 g |
| Esbiothrine : | 0,8 g |

### Exemple 2 : Aérosol selon l'invention

| | |
|---|---|
| Esbiothrine : | 0,2 % |
| Emulsionant : | 19,8 % |
| Fréon : | 80 % |

### Exemple 3 : Préparation d'une composition destinée à être chauffée électriquement

On adsorbe une solution de 0,6 g de Esbiothrine dans 5 cm³ de toluène à la surface d'un morceau d'une matière fibreuse inerte parallélépipédique de dimensions 2 × 2 × 0,8 cm. On fixe sur ce morceau de matière fibreuse, un deuxième morceau de même dimension. On obtient ainsi une composition fumigène qui sera utilisée en la chauffant sur une plaque pourvue d'une résistance électrique.

### Exemple 4 : Composition pharmaceutique vétérinaire selon l'invention

| | |
|---|---|
| Esbiothrine : | 5 g |
| Butoxyde de pipéronyle : | 25 g |
| Polysorbate 80 : | 10 g |
| Triton × 100 : | 25 g |
| Acétate de tocophérol : | 1 g |
| Ethanol q.s.p. : | 100 cm³ |

Etude de l'activité d'un mélange insecticide selon l'invention (Esbiothrine). Mise en évidence de l'effet de synergie.

A. Essais sur mouches
a) Protocole opératoire

Des coils neutres sont imprégnés de l'insecticide à tester mis en solution acétonique, par dépôt à la pipette, sur leurs deux faces, à raison de 1,5 à 2 ml par gramme de coil. Les essais sont réalisés en enceinte de verre transparent, de forme cubique et de 70 mm d'arête, à raison de 20 femelles de mouches domestiques par test. Ces mouches sont âgées de 4 à 5 jours.

Au bout de quelques minutes, par une trappe centrale, ménagée à cet effet dans la face inférieure de l'enceinte est introduit un morceau de coil d'environ 2 grammes et enflammé aux deux extrémités. La combustion du coil dure tout au long du test ou bien jusqu'à ce que 95 % des individus soient en état de Knock-Down (K. D.). Les essais sont répétés 3 fois par dose.

Les contrôles de K.D. sont effectués toutes les minutes.

Cinq minutes après la fin de la combustion, l'enceinte est ventilée et les insectes regroupés dans des cagettes cylindriques (modèle O.M.S) munies d'un morceau de coton humidifié pour assurer la survie des individus ayant éventuellement récupéré. Les insectes sont ensuite stockés en salle climatisée à 22° ± 1 °C et 65 ± 5 % d'humidité relative. Le contrôle des mortalités apparentes (Killing Time ou KT) est effectué au bout de 24 heures.

b) Résultats expérimentaux :

Tableau 1 : Activité insecticide des coils sur Musca domestica

| Produits | Doses (%) | Moyennes des KT 50 | Moyennes des KT 90 | Vitesse combust. du coil (mg/mn) |
|---|---|---|---|---|
| Bioalléthrine | 0,15 | 19,3 | 25,3 | 68,4 |
| | 0,30 | 15,3 | 19,8 | 73,8 |
| (50 % R + | 0,45 | 14,2 | 18,5 | 71,3 |
| 50 % S) | 0,60 | 12,9 | 16,7 | 69,9 |
| S-Bioalléthrine | 0,075 | 23,7 | 33,7 | 69,7 |
| (100 % S) | 0,15 | 16,8 | 21,8 | 69,5 |
| | 0,30 | 12,6 | 15,7 | 72,6 |
| | 0,45 | 11,0 | 14,8 | 71,5 |
| Esbiothrine | 0,075 | 21,8 | 31,3 | 68,6 |
| | 0,15 | 14,8 | 19,5 | 73,1 |
| (75 % S + | 0,30 | 12,1 | 16,8 | 72,8 |
| 25 % R) | 0,45 | 10,8 | 14,7 | 71,5 |

Les résultats du tableau 1 ont permis d'établir les tableaux 2 et 3 ci-après.

Tableau 2 : Puissances relatives aux KT 50 pour les produits étudiés sur Musca domestica

| | Concentrations (C) et Puissances Relatives (PR) aux KT 50 de : | | | | | | |
|---|---|---|---|---|---|---|---|
| | 11,5 mn | | 13 mn | | | 14,5 mn | | |
| Produits | C | P.R. | C | P.R. | | C | P.R. | |
| Bioalléthrine | — | — | 0,600 | 1 | | 0,390 | 1 | |
| S-Bioalléthrine | 0,395 | 1 | 0,295 | 2,03 | 1 | 0,220 | 1,77 | 1 |
| Esbiothrine | 0,365 | 1,08 | 0,240 | 2,50 | 1,23 | 0,160 | 2,44 | 1,38 |

Tableau 3 : Puissances relatives aux KT 90 pour les produits étudiés sur Musca domestica

| | Concentrations (C) et Puissances Relatives (PR) aux KT 90 de : | | | | | | | | |
| | 17 mn | | | 18 mn | | | 19 mn | | |
| Produits | C | P.R. | | C | P.R. | | C | P.R. | |
| Bioalléthrine | 0,580 | 1 | | 0,48 | 1 | | 0,37 | 1 | |
| S-Bioalléthrine | 0,275 | 2,11 | 1 | 0,24 | 1,96 | 1 | 0,205 | 1,81 | 1 |
| Esbiothrine | 0,275 | 2,11 | 1,0 | 0,22 | 2,14 | 1,09 | 0,175 | 2,11 | 1,17 |

B. Essais sur Culex :

a) Protocole opératoire :
Il est analogue à celui utilisé pour les mouches. Les individus utilisés sont âgés de 2 à 3 jours. Le morceau de coil introduit par la trappe pèse environ 1 gramme et il est enflammé aux deux extrémités. Les contrôles de K.D. sont effectués toutes les 30 secondes.

b) Résultats expérimentaux :

Tableau 4 : Activité insecticide des coils sur Culex pipiens

| Produits | Doses % | Moyennes des KT 50 | Moyennes des KT 90 | Vitesse de combustion du coil (mg/mn) |
|---|---|---|---|---|
| Bioalléthrine | 0,15 | 7,8 | 9,3 | 72,5 |
| | 0,30 | 6,2 | 7,4 | 75,3 |
| | 0,45 | 5,3 | 6,6 | 75,7 |
| S-Bioalléthrine | 0,075 | 7,6 | 9,5 | 75,8 |
| | 0,15 | 6,2 | 8,1 | 76,7 |
| | 0,30 | 4,7 | 6,1 | 72,5 |
| Esbiothrine | 0,075 | 7,3 | 8,7 | 76,6 |
| | 0,15 | 6,1 | 7,6 | 73,8 |
| | 0,30 | 4,8 | 6,3 | 74,7 |

Les résultats du tableau 4 ont permis d'établir les tableaux 5 et 6 ci-après.

Tableau 5 : Puissances relatives aux KT 50 pour les produits étudiés sur Culex pipiens

| | Concentrations (C) et Puissances Relatives (PR) aux KT 50 de : | | | | | | | | |
| | 5,5 mm | | | 6,25 mn | | | 7,0 mn | | |
| Produits | C | P.R. | | C | P.R. | | C | P.R. | |
| Bioalléthrine | 0,410 | 1 | | 0,295 | 1 | | 0,210 | 1 | |
| S-Bioalléthrine | 0,205 | 2,00 | 1 | 0,145 | 2,03 | 1 | 0,102 | 2,06 | 1 |
| Esbiothrine | 0,205 | 2,00 | 1,00 | 0,135 | 2,19 | 1,07 | 0,088 | 2,39 | 1,16 |

Tableau 6 : Puissances relatives aux KT 90 pour les produits étudiés sur Culex pipiens

| Produits | Concentrations (C) et Puissances Relatives (PR) aux KT 90 de : | | | | | |
| | 7 mn | | 7,75 mn | | 8,5 mn | |
| | C | P.R. | C | P.R. | C | P.R. |
| Bioalléthrine | 0,37 | 1 | 0,27 | 1 | 0,20 | 1 |
| S-Bioalléthrine | 0,22 | 1,68 1 | 0,16 | 1,69 1 | 0,118 | 1,70 1 |
| Esbiothrine | 0,205 | 1,81 1,07 | 0,135 | 2,0 1,19 | 0,086 | 2,33 1,37 |

C. Essais sur Aedes :

a) Protocole opératoire :
Il est analogue à celui utilisé pour Culex. Le coil de 1 gramme est enflammé à une seule extrémité.

b) Résultats expérimentaux :

Tableau 7 : Activité insecticide des coils sur Aedes aegypti

| Produits | Doses % | Moyennes des KT 50 | Moyennes des KT 90 | Vitesse de combustion du coil (mg/mn) |
|---|---|---|---|---|
| Bioalléthrine | 0,037 5 | 18,3 | 21,7 | 35,4 |
| | 0,075 | 9,0 | 11,2 | 38,5 |
| | 0,150 | 7,6 | 9,7 | 38,3 |
| S-Bioalléthrine | 0,037 5 | 12,5 | 15,8 | 35,6 |
| | 0,075 | 7,4 | 9,0 | 40,0 |
| | 0,150 | 6,0 | 7,7 | 43,5 |
| Esbiothrine | 0,037 5 | 12,3 | 15,3 | 36,9 |
| | 0,075 | 6,7 | 8,8 | 42,0 |
| | 0,150 | 5,0 | 6,3 | 41,5 |

Les résultats du tableau 7 ont permis d'établir les tableaux 8 et 9 ci-après.

Tableau 8 : Puissances relatives aux KT 50 pour les produits étudiés sur Aedes aegypti

| Produits | Concentrations (C) et Puissances Relatives (PR) aux KT 50 de : | | | | | |
| | 5,5 mn | | 6,5 mn | | 7,5 mn | |
| | C | P.R. | C | P.R. | C | P.R. |
| Bioalléthrine | — | — | — | — | 0,155 | 1 |
| S-Bioalléthrine | 0,190 | 1 | 0,115 | 1 | 0,070 | 2,21 |
| Esbiothrine | 0,120 | 1,58 | 0,080 | 1,44 | | |

## 0 017 526

Tableau 9 : Puissances relatives aux KT 90 pour les produits étudiés sur Aedes aegypti

| Produits | Concentrations (C) et Puissances Relatives (PR) aux KT 90 de : | | | | | | |
|---|---|---|---|---|---|---|---|
| | 8,0 mn | | 8,5 mn | | 9,0 mn | | |
| | C | P.R. | C | P.R. | C | P.R. | |
| Bioalléthrine | — | — | — | — | 0,20 | 1 | |
| S-Bioalléthrine | 0,125 | 1 | 0,097 | 1 | 0,075 | 2,67 | 1 |
| Esbiothrine | 0,092 | 1,36 | 0,080 | 1,21 | | | |

D. Conclusions générales :

Si l'activité insecticide était strictement proportionnelle à la teneur en isomère S, en calculant les puissances relatives de la Bioalléthrine, de la S-Bioalléthrine et de l'Esbiothrine en fonction des proportions de S-Bioalléthrine que contiennent ces 3 produits on trouverait les résultats suivants :

— S-Bioalléthrine/Bioalléthrine  PR # 2
— Esbiothrine/Bioalléthrine  PR # 1,5
— Esbiothrine/S-Bioalléthrine  PR # 0,75

Or les résultats expérimentaux donnés précédemment peuvent se résumer ainsi :

— S-Bioalléthrine/Bioalléthrine ; au KT 50, PR # 2 pour mouche, Culex et Aedes. De même au KT 90, PR # 2 pour mouche, Aedes et Culex.

— Esbiothrine/Bioalléthrine, au KT 50, PR de 2,3 à 2,50 pour mouche et voisin de 2 pour Culex. De même au KT 90 Esbiothrine/Bioalléthrine PR # 2 pour mouche et Culex.

— Esbiothrine/S-Bioalléthrine, au KT 50, PR # 1 pour mouche et Culex et PR = 1,5 pour Aedes. A KT 90 PR légèrement supérieur à 1 pour mouche et Culex et PR = 1,30 pour Aedes.

Ces données permettent de constater que les valeurs des puissances relatives obtenues expérimentalement concordent, en général, avec les prévisions pour la relation S-Bioalléthrine/Bioalléthrine (PR # 2). Par contre elles s'en éloignent pour la relation Esbiothrine/S-Bioalléthrine (PR entre 1 et 1,38 au lieu de 0,75 calculée) et pour la relation Esbiothrine/Bioalléthrine (rapport entre 1,81 et 2,50 au lieu de 1,5 calculé), quel que soit l'insecte étudié et le KT pris comme référence (KT 50 ou KT 90).

En conséquence cette étude met en évidence notamment l'existence d'un intéressant phénomène de synergie d'activité insecticide dans le mélange d'environ 75 % de S-Bioalléthrine et d'environ 25 % de R-Bioalléthrine (Esbiothrine), qui a pu être mis en évidence en déterminant les puissances relatives de la Esbiothrine et de la Bioalléthrine ou de la Esbiothrine et de la S-Bioalléthrine.

**Revendications**

1. Compositions douées d'activité contre les arthropodes, caractérisées en ce qu'elles contiennent comme partie active des mélanges synergiques contenant de 90 % à 60 % de d trans chrysanthémate de (S) 1-oxo 2-allyl 3-méthyl cyclopent-2-èn 4-yle et de 10 à 40 % de d trans chrysanthémate de (R) 1-oxo 2-allyl 3-méthyl cyclopent-2-èn 4-yle.

2. Compositions selon la revendication 1, caractérisées en ce qu'elles contiennent comme partie active des mélanges synergiques contenant de 80 % à 70 % de d trans chrysanthémate de (S) 1-oxo 2-allyl 3-méthyl cyclopent-2-èn 4-yle et de 20 % à 30 % de d trans chrysanthémate de (R) 1-oxo 2-allyl 3-méthyl cyclopent-2-èn 4-yle.

3. Compositions selon la revendication 1 ou 2, caractérisées en ce qu'elles contiennent comme partie active un mélange synergique contenant environ 75 % de d trans chrysanthémate de (S) 1-oxo 2-allyl 3-méthyl cyclopent-2-èn 4-yle et environ 25 % de d trans chrysanthémate de (R) 1-oxo 2-allyl 3-méthyl cyclopent-2-èn 4-yle.

4. Compositions selon l'une quelconque des revendications 1 à 3, caractérisées en ce qu'elles sont utilisées contre les insectes.

5. Compositions selon la revendication 4, caractérisées en ce qu'elles sont utilisées sous forme de compositions fumigantes.

6. Compositions selon la revendication 5, caractérisées en ce qu'elles sont constituées, pour la partie non active, d'un serpentin insecticide combustible.

7. Compositions selon la revendication 6, caractérisées en ce qu'elles renferment de 0,03 à 1 % en poids de matière active.

8. Compositions selon la revendication 5, caractérisées en ce qu'elles sont constituées par un substrat fibreux dans lequel est incorporé la matière active.

9. Compositions selon la revendication 8, caractérisées en ce qu'elles renferment de 0,03 à 95 % en poids de matière active.

10. Compositions selon la revendication 5, caractérisées en ce qu'elles sont constituées par une lampe dont la mèche est imbibée d'une solution huileuse du principe actif.

11. Compositions selon la revendication 10, caractérisées en ce qu'elles renferment de 0,03 à 95 % en poids de matière active.

12. Compositions selon la revendication 4, caractérisées en ce qu'elles sont obtenues en incorporant le principe actif aux adjuvants nécessaires pour la pulvérisation en aérosols.

13. Compositions selon l'une quelconque des revendications 1 à 12, caractérisées en ce qu'elles contiennent, outre la partie active, du butoxyde de pipéronyle.

14. Compositions pharmaceutiques vétérinaires selon l'une quelconque des revendications 1 à 3 ou 13, destinées à la lutte contre les sarcoptidés et les ixodidés.

15. Compositions selon la revendication 16, destinées à la lutte contre les sarcoptidés et les ixodidés tels que les gales et les tiques.

## Claims

1. Compositions endowed with activity against arthropods, characterized in that they contain as active part synergic mixtures containing from 90 % to 60 % of d trans chrysanthemate of (S) 1-oxo 2-allyl 3-methyl cyclopent-2-en 4-yl and from 10 to 40 % of d trans chrysanthemate of (R) 1-oxo 2-allyl 3-methyl cyclopent-2-en 4-yl.

2. Compositions according to Claim 1, characterized in that they contain as active part synergic mixtures containing from 80 % to 70 % of d trans chrysanthemate of (S) 1-oxo 2-allyl 3-methyl cyclopent-2-en 4-yl and from 20 % to 30 % of d trans chrysanthemate of (R) 1-oxo 2-allyl 3-methyl cyclopent-2-en 4-yl.

3. Compositions according to Claim 1 or 2, characterized in that they contain as active part a synergic mixture containing about 75 % of d trans chrysanthemate of (S) 1-oxo 2-allyl 3-methyl cyclopent-2-en 4-yl and about 25 % of d trans chrysanthemate of (R) 1-oxo 2-allyl 3-methyl cyclopent-2-en 4-yl.

4. Compositions according to any one of the Claims 1 to 3, characterized in that they are utilized against insects.

5. Compositions according to Claim 4, characterized in that they are utilized in the form of fumigating compositions.

6. Compositions according to Claim 5, characterized in that they are constituted, as regards the non-active part, of a combustible insecticide serpentine.

7. Compositions according to Claim 6, characterized in that they contain from 0.03 to 1 % by weight of active material.

8. Compositions according to Claim 5, characterized in that they are constituted by a fibrous substrate in which the active material is incorporated.

9. Compositions according to Claim 8, characterized in that they contain from 0.03 to 95 % by weight of active material.

10. Compositions according to Claim 5, characterized in that they are constituted by a lamp of which the wick is soaked with an oily solution of the active principle.

11. Compositions according to Claim 10, characterized in that they contain from 0.03 to 95 % by weight of active material.

12. Compositions according to Claim 4, characterized in that they are obtained by incorporating the active principle with the necessary adjuvants for atomization in aerosols.

13. Compositions according to any one of the Claims 1 to 12, characterized in that they contain, in addition to the active part, piperonyl butoxide.

14. Veterinary pharmaceutical compositions according to any one of the Claims 1 to 3 or 13, intended for combatting sarcoptides and ixodides.

15. Compositions according to Claim 14, intended for combatting sarcoptides and ixodides such as mange mites and ticks.

## Ansprüche

1. Zusammensetzungen, die mit einer Aktivität gegenüber Arthropoden ausgestattet sind, dadurch gekennzeichnet, daß sie als aktiven Bestandteil synergistische Gemische enthalten, die 90 bis 60 % (S)-1-Oxo-2-allyl-3-methyl-cyclopent-2-en-4-yl-d-trans-chrysanthemat und 10 bis 40 % (R)-1-Oxo-2-allyl-3-methyl-cyclopent-2-en-4-yl-d-trans-chrysanthemat enthalten.

2. Zusammensetzungen gemäß Anspruch 1, dadurch gekennzeichnet, daß sie als aktiven Bestandteil synergistische Gemische enthalten, die 80 bis 70 % (S)-1-Oxo-2-allyl-3-methyl-cyclopent-2-en-4-yl-d-trans-chrysanthemat und 20 bis 30 % (R)-1-Oxo-2-allyl-3-methyl-cyclopent-2-en-4-yl-d-trans-chrysanthemat enthalten.

3. Zusammensetzungen gemäß Anspruch 1 oder 2, dadurch gekennzeichnet, daß sie als aktiven Bestandteil ein synergistisches Gemisch enthalten, das etwa 75 % (S)-1-Oxo-2-allyl-3-methyl-cyclopent-2-en-4-yl-d-trans-chrysanthemat und etwa 25 % (R)-1-Oxo-2-allyl-3-methyl-cyclopent-2-en-4-yl-d-trans-chry- · santhemat enthält.

4. Zusammensetzungen gemäß einem der Ansprüche 1 bis 3, dadurch gekennzeichnet, daß sie gegenüber Insekten angewandt werden.

5. Zusammensetzungen gemäß Anspruch 4, dadurch gekennzeichnet, daß sie in Form von Räucherzusammensetzungen angewandt werden.

6. Zusammensetzungen gemäß Anspruch 5, dadurch gekennzeichnet, daß sie im Hinblick auf den nicht-aktiven Teil aus einer brennbaren insektiziden Schlange bestehen.

7. Zusammensetzungen gemäß Anspruch 6, dadurch gekennzeichnet, daß sie 0,03 bis 1 Gewichts-% Wirkstoff enthalten.

8. Zusammensetzungen gemäß Anspruch 5, dadurch gekennzeichnet, daß sie aus einem faserartigen Substrat bestehen, in das das aktive Material eingebracht ist.

9. Zusammensetzungen gemäß Anspruch 8, dadurch gekennzeichnet, daß sie 0,03 bis 95 Gewichts-% aktives Material enthalten.

10. Zusammensetzungen gemäß Anspruch 5, dadurch gekennzeichnet, daß sie aus einer Lampe bestehen, deren Docht mit einer Öl-Lösung des Wirkstoffs getränkt ist.

11. Zusammensetzungen gemäß Anspruch 10, dadurch gekennzeichnet, daß sie 0,03 bis 95 Gewichts-% aktives Material enthalten.

12. Zusammensetzungen gemäß Anspruch 4, dadurch gekennzeichnet, daß sie erhalten werden, indem man den Wirkstoff Adjuvantien einverleibt, die für die Zerstäubung in Form von Aerosolen erforderlich sind.

13. Zusammensetzungen gemäß einem der Ansprüche 1 bis 12, dadurch gekennzeichnet, daß sie außer dem aktiven Bestandteil Piperonylbutoxid enthalten.

14. Veterinäre pharmazeutische Zusammensetzungen gemäß einem der Ansprüche 1 bis 3 oder 13 für die Bekämpfung von Sarkoptiden und Ixodiden.

15. Zusammensetzungen gemäß Anspruch 14 für die Bekämpfung von Sarkoptiden und Ixodiden, wie Krätzmilben und Zecken.